# EUROPÄISCHE PATENTSCHRIFT

(11) **EP 0 623 740 B1**
(45) Veröffentlichungstag und Bekanntmachung des Hinweises auf die Patenterteilung: **18.10.1995**
(21) Anmeldenummer: 94106646.6
(22) Anmeldetag: 28.04.1994
(51) Int. Cl.: F01N 7/18, F16L 27/10

(54) **Vorrichtung zum Dämpfen von Bewegungen**
Device for dampening motions
Dispositif pour amortir des mouvements

(30) Priorität: 05.05.1993 DE 4314771
(43) Veröffentlichungstag der Anmeldung: 09.11.1994
(73) Patentinhaber: IWK Regler und Kompensatoren GmbH, D-76297 Stutensee (DE)
(72) Erfinder: Holzhausen, Wieland, Dr., D-94530 Auerbach (DE)
(74) Vertreter: Dipl.-Ing. Heiner Lichti Dipl.-Phys. Dr.rer.nat. Jost Lempert Dipl.-Ing. Hartmut Lasch

(56) Entgegenhaltungen:
- DE-A- 3 321 382
- DE-U- 8 915 657
- FR-A- 2 087 356
- US-A- 2 562 262

## Beschreibung

Die Erfindung betrifft eine Vorrichtung zum Dämpfen von Bewegungen nach dem Oberbegriff des Anspruchs 1.

Derartige Vorrichtungen werden in Entkopplungselementen beispielsweise nach der DE-OS 33 21 382 zwischen Motor und Auspuffanlage insbesondere eines Kraftfahrzeugs vorgesehen, um zu verhindern, daß die Schwingungen des Motors ungedämpft auf die Auspuffanlage durchschlagen und hierdurch zur Reduzierung der Lebensdauer der Auspuffanlage führen; darüber hinaus wird hierdurch eine Schallreduzierung erreicht. Die Dämpfungskissen bestehen aus verpreßtem Metalldraht, wobei der Metalldraht selbst in Form eines Gestrickes oder als Wirrlage vorliegen kann. Die bekannten Dämpfungskissen sind paarweise in durch innere Widerlager geteilten zweihäusigen Kammern angeordnet.

Die Kissen werden auch bei auf die Gesamtentkopplungselemente ausgeübtem Zug lediglich auf Druck beansprucht. Die allseitig umschließende Gehäusekonstruktion verhindert zuverlässig jeglichen Formverlust des Kissens, so daß sie im Hinblick auf gute Schwingungsisolation relativ weich ausgebildet, d.h. gering verdichtet sein können.

Der Erfindung liegt die Aufgabe zugrunde, einer derartigen Vorrichtung mit einem Dämpfungskissen in einfacher Weise eine höhere Lastaufnahmefähigkeit zu verleihen und sie insbesondere derart auszubilden, daß sie in einhäusigen Kammern von Entkopplungselementen einsetzbar sind.

Erfindungsgemäß wird die genannte Aufgabe bei einer Vorrichtung aus verpreßtem Metalldraht durch die kennzeichnenden Merkmale des Anspruchs 1 erreicht.

Eine derartige erfindungsgemäße Vorrichtung mit einem armierten Kissen ist erstmals praktikabel in einhäusigen Kammern von Entkopplungselementen einsetzbar. Die Abstände zwischen relativ zueinander beweglichen, direkt nebeneinander angeordneten Wandteilen können dabei leicht größer gewählt werden als die entsprechenden Schwingungswege. Die Armierung füllt den Raum zwischen wirksamen Kissenwandbereichen voll, d.h. abstandslos aus. Die Ausnehmung im Kissen ist lagesichernd für das Verstärkungsteil bzw. die Armierung ausgebildet.

Durch die Armierung mittels eines Verstärkungsteils wird eine hohe Lastaufnahmefähigkeit, insbesondere bei axial wirkenden Scherkräften, erreicht, wie sie bei den genannten Entkopplungselementen auftreten. Auf diese Weise gelingt es auch, statt der gewöhnlich paarweise verspannt gebräuchlichen Konstruktion die Anzahl hintereinander angeordneter Kissen auf eines zurückzuführen. Die Kissen selbst können im Hinblick auf gute Schwingungsisolation relativ weich ausgebildet sein, d.h. gering verdichtet sein, da einwirkende mechanische Kräfte, insbesondere Scherkräfte, durch das Verstärkungsteil aufgenommen werden.

In alternativer Ausgestaltung kann vorgesehen sein, daß das Verstärkungsteil vollständig vom Kissenmaterial umgeben ist oder daß das Verstärkungteil in einer einseitig offenen vorgesehenen Nut des Kissenmaterials eingebracht ist. In ersterem Falle wird das Kissenmaterial um das Verstärkungsteil herum verpreßt, während im zweitgenannten Fall beim Verpressen des Kissenmaterials eine Nut mit ausgebildet wird, in die das Verstärkungsteil eingelegt werden kann.

Die Verstärkungsteile sind grundsätzlich an die Kontur des Dämpfungskissens angepaßt. Wenn dieses ringförmig ausgebildet ist, können die Verstärkungsteile als Ringsegmente ausgebildet sein, oder aber es kann vorgesehen sein, daß bei ringförmiger Kontur des Kissens das Verstärkungsteil ebenfalls ringförmig ausgebildet ist. In alternativer Ausgestaltung kann vorgesehen sein, daß das Verstärkungsteil eine von der Kontur des Kissens abweichende Kontur aufweist, wobei insbesondere bei kreisringförmiger Kissenstruktur das Verstärkungsteil ellipsenförmig ausgebildet ist. Hierdurch wird es möglich, das Verstärkungsteil gezielt in Zonen erhöhter Beanspruchung zu legen.

Die Verstärkungsteile selbst können in unterschiedlichster Weise ausgebildet sein, nämlich als mehrere Drähte oder Metallringe, als Drahtseile oder -bündel, als Massivteile, jeweils mit rechteckigem, kreisförmigem oder sonstigem Querschnitt. Die Verstärkungsteile können als Blechlamellenpaket oder als Hohlprofil, beispielsweise mit einem U-förmigen Querschnitt ausgebildet sein. In bevorzugter Ausgestaltung ist vorgesehen, daß der Querschnitt des Verstärkungsteils in Umfangsrichtung unterschiedlich ist. Das Verstärkungsteil kann so insbesondere in Zonen erhöhter Beanspruchung lokal verstärkt ausgebildet sein.

Eine bevorzugte Weiterbildung der Erfindung sieht vor, daß an dem Dämpfungskissen als Widerlager ausschließlich von außen angreifende, unmittelbar nebeneinander liegende Wandabschnitte eines das Dämpfungskissen einschließenden Gehäuses relativ zueinander beweglich sind. Bei ringförmiger Ausbildung liegen dabei die relativ zueinander beweglichen Wandabschnitte in Umfangsrichtung nebeneinander. Dabei kann vorgesehen sein, daß beidseitig des Dämpfungskissens angeordnete, relativ zueinander bewegliche Wandabschnitte unterschiedlicher Gehäuseteile einander fluchtend gegenüberliegen oder daß beidseitig des Dämpfungskissens angeordnete Wandabschnitte eines Gehäuseteils jeweils paarig einander fluchtend gegenüberliegen. Gerade im letzten Fall treten erhebliche Scherkräfte auf. Die Gehäuse bestehen in beiden Fällen nur aus zwei Teilen. Das Verstärkungsteil ist durch die Kissen lagegesichert mit Abstand zu den Gehäuseteilen der Vorrichtung angeordnet.

Insgesamt wird durch das erfindungsgemäße Vorsehen eines Verstärkungsteils in Dämpfungskissen in einfacher Weise eine höhere Belastbarkeit derselben, insbesondere gegenüber Scherkräften, erzielt.

Weitere Vorteile und Merkmale der Erfindung ergeben sich aus den Ansprüchen und aus der nachfolgenden Beschreibung, in der Ausführungsbeispiele der Erfindung unter Bezugnahme auf die Zeichnung im einzelnen erläutert sind. Dabei zeigt:
- Figur 1: einen achssenkrechten Schnitt durch ein erfindungsgemäßes Dämpfungskissen;
- Figuren 2a-e: achsparallele Schnitte durch erfindungsgemäße Dämpfungskissen entsprechend II-II der Figur 1;
- Figuren 3a+b: Schnitte entsprechend der Figur 2 durch weitere Ausführungsformen des erfindungsgemäßen Dämpfungskissens;
- Figuren 4a-c: Schnitte entsprechend Figur 3a mit aus mehreren Einzelkissen bestehenden Dämpfungskissen;
- Figur 5: eine weitere Ausgestaltung der Erfindung in der Darstellung der Figur 1 mit von der kreisförmigen Ringkontur des Dämpfungskissens abweichender Verstärkungsteilkontur;
- Figur 6: eine Ausgestaltung mit über seinen Umfang hin unterschiedlichem Querschnitt;
- Figur 7a-c: eine durch ein Gehäuse bestimmte Weiterbildung der erfindungsgemäßen Vorrichtung in a) Stirnansicht und b), c) Schnitten entlang X-X bzw. Y-Y; und
- Figur 8: die Darstellung der Aufnahme der Scherbelastung bei auftretenden Kräften in einem Schnitt Z-Z der Figur 7a.

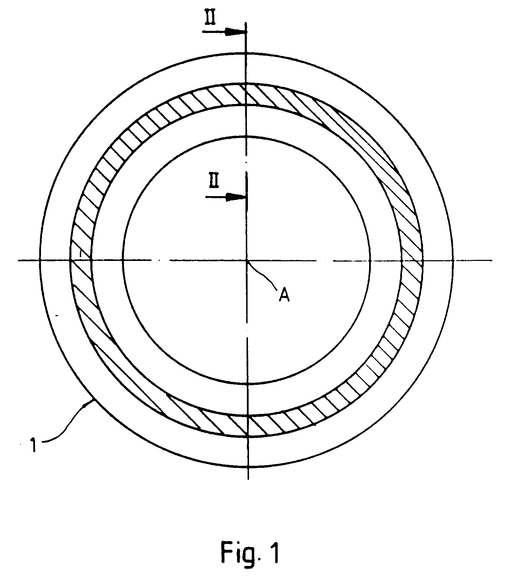

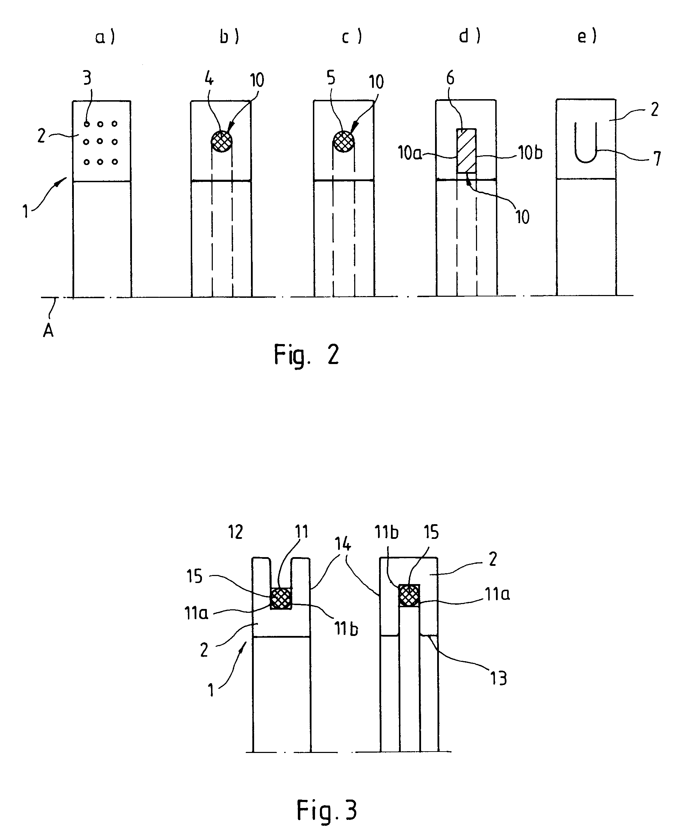

Die erfindungsgemäße Vorrichtung 1 in ihrer bevorzugten Ausgestaltung wird anhand eines ringförmigen Dämpfungskissens 2 (Figur 1) beschrieben. Das Dämpfungskissen kann auch andere Außenkonturen aufweisen, wie teilringförmig oder dergleichen. Das Dämpfungskissen 2 weist in der dargestellten Ausführungsform (Figuren 2, 3) eine quadratische Querschnittkontur in Achsrichtung auf. Es besteht in an sich bekannter Weise aus verpreßtem Metalldraht, wobei dieser ein Gestricke oder Wirrlage sein kann. Bei den Ausgestaltungen der Figuren 1 und 2 sind im Inneren des Dämpfungskissenmaterials 2 Armierungen oder Verstärkungsteile eingeformt. Diese können aus mehreren einzelnen Drähten 3, einem Metallring 4, insbesondere aus Edelstahl, verseilten Drähten oder Drahtbündeln 5, aus Ringen oder Ringsegmenten 6 mit rechteckigem Querschnitt in Massivausbildung oder aus einem ringförmigen, im Querschnitt U-förmigen Teil 7 ausgebildet sein.

In anderer Ausgestaltung (Figur 3) kann vorgesehen sein, daß im Dämpfungskissen 2 Nuten 11 ausgebildet sind, und zwar entweder in der äußeren Umfangswand 12 oder der inneren Umfangswand 13 des ringförmigen Teils oder aber in Stirnseitenwandungen 14 (nicht dargestellt). In die Nuten sind dann Verstärkungsteile 15, die grundsätzlich in der in Figur 2 dargestellten und unter Bezug auf diese beschriebenen Weise ausgebildet sein können, eingelegt.

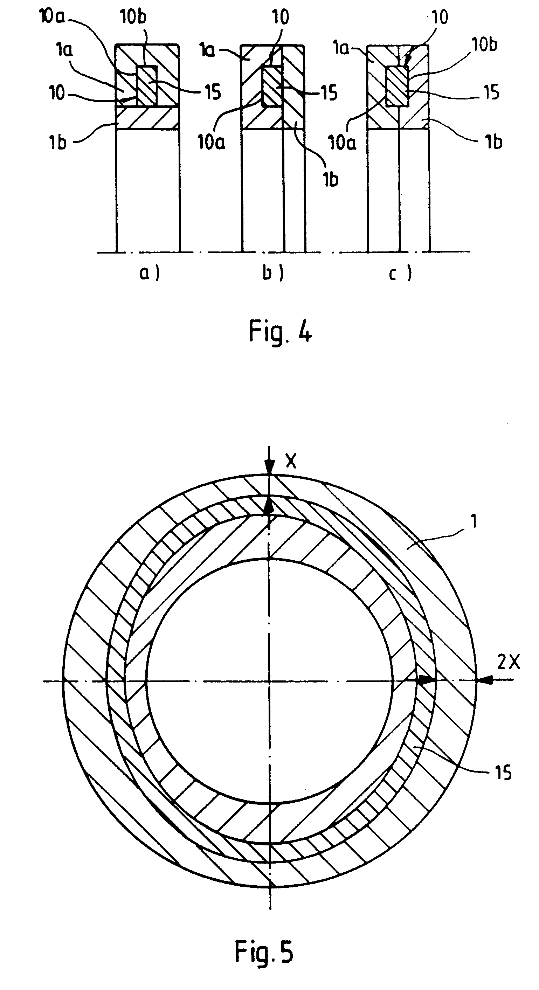

Die Dämpfungskissen können auch mehrteilig mit Einzelkissen 1a, 1b ausgebildet sein (Figur 4a-c). Dabei ist bei den Figuren 4a und 4b das Verstärkungsteil 15 in eine Nut des Einzelkissens 1a eingelegt, deren offene Seite jeweils durch das Einzelkissen 1b abgedeckt wird, und zwar bei der Ausgestaltung der Figur 4a am inneren Mantelumfang durch ein eingestecktes Einzelkissen 1b, bei der Figur 4b auf einer Stirnseite durch ein weiteres aufgesetztes Einzelkissen 1b.

Bei der Figur 4c sind Nuten in beiden Einzelkissen 1a, 1b ausgebildet, in die das Verstärkungsteil 15 eingesetzt ist.

Die Belastung der Dämpfungskissen 2 kann angular in radialer Richtung über das Kissen hin unterschiedlich verteilt sein. Dem trägt eine Ausgestaltung nach der Figur 5 Rechnung, bei der die Kontur des Verstärkungsteils 15 von der Kontur des Dämpfungskissens 2 abweicht. Während das Dämpfungskissen wie in üblicher Weise bei einflutigen Abgasanlagen kreisringförmig ausgebildet ist, weist das Verstärkungsteil 15 eine elliptische Kontur auf. Der Abstand des Verstärkungsteils 15 von der Außenseite des Dämpfungskissens 2 verändert sich von dem oberen Bereich des Dämpfungskissens 2 mit einer Stärke von x in einer um 90° verschwenkten Position (rechts und links und auf 2x, während der Abstand an der Unterseite wieder x ist).

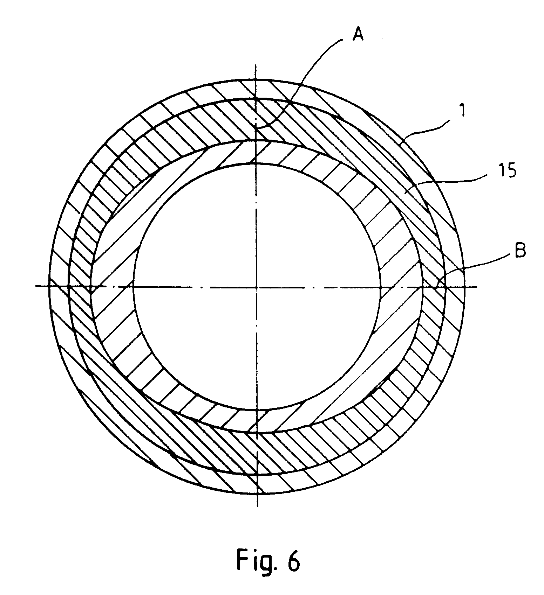

Weiterhin können die auftretenden Kräfte in Umfangsrichtung unterschiedlich verteilt sein. Dem trägt eine Ausgestaltung nach der Figur 6 Rechnung, bei der die Stärke oder der Querschnitt des Verstärkungsteils 15 ebenfalls in Umfangsrichtung bzw. von der Angularposition abweicht. So ist das Verstärkungsteil 15 im Bereich A der Figur 6 stärker ausgebildet als in einem um 90° versetzten Bereich B.

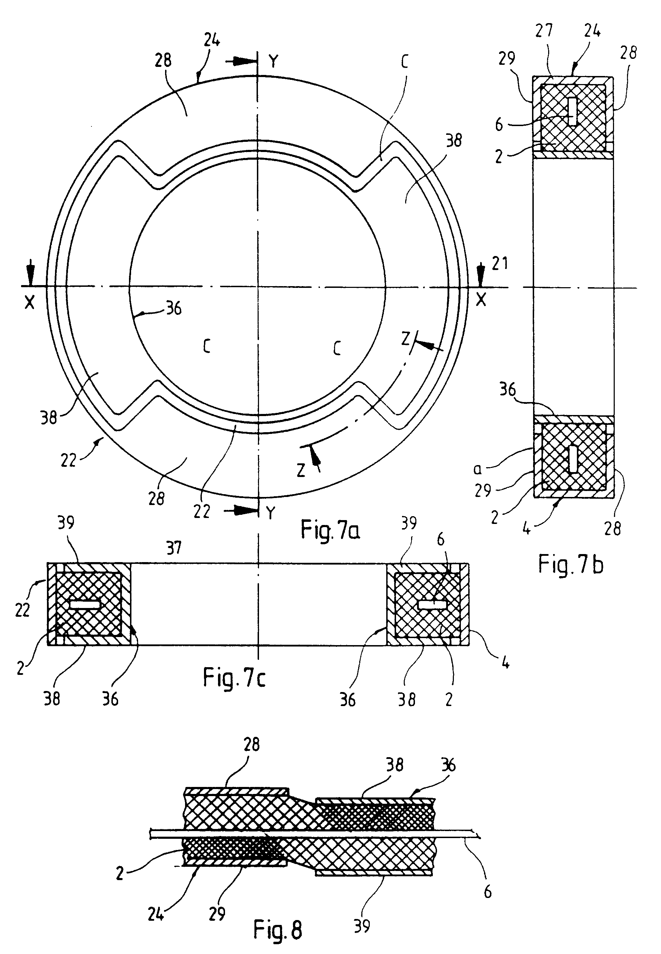

Die erfindungsgemäße Vorrichtung zum Dämpfen von Schwingungen gemäß der Figuren 7a-c und 8 zum Einsatz insbesondere in Abgasleitungen von Kraftfahrzeugen weist grundsätzlich ein Gehäuse 22 auf, das bevorzugt Ringform hat, wobei in dem Gehäuse Dämpfungskissen 2 angeordnet sind, und zwar bei Ringform entweder ein ringförmiges oder aber mehrere sektorförmige, die mit ihren radial gerichteten Stirnseiten entweder aneinander anschließen können oder an mit dem Gehäuse verbundenen Widerlagern anliegen. In axialer Richtung können auch jeweils mehrere Dämpfungskissen 2 nebeneinander angeordnet sein, wobei allerdings zwischen diesen keine mit dem Gehäuse verbundenen starren Widerlager vorgesehen sind.

Das Gehäuse 22 ist als kassette ausgebildet und besteht nur aus zwei Gehäuseteilen 24, 36. Eines der Gehäuseteile, 24, weist eine äußere Mantelwand 27 auf, von der sich nach innen stirnseitige Wandabschnitte 28, 29 erstrecken, zwischen denen jeweils Aussparungen 21 gebildet sind. Die stirnseitigen Wandabschnitte 29, 28, die zwischen sich das oder die Dämpfungskissen 2 einschließen, liegen hier fluchtend einander gegenüber (paarig), obwohl sie auch in Umfangsrichtung zueinander versetzt sein können (unpaarig).

Zwischen direkt benachbarten oder nebeneinander liegenden, relativ zueinander beweglichen Wandabschnitten 28, 38 bzw. 29, 39 bestehen endliche Abstände, Spalten oder Lücken C, C', die die Relativbeweglichkeit ermöglichen.

Das innere Gehäuseteil 36 weist eine innere Umfangswandung 37 auf, von der aus sich nach außen Wandungsabschnitte 38, 39 in die Ausnehmungen 21 zwischen den Wandabschnitten 28, 29 des äußeren Gehäuseteils 24 erstrecken und zwischen sich wiederum entsprechende Ausnehmungen 22 bilden.

Das oder die Dämpfungskissen 2 liegen also an einer ihrer Stirnseiten in Umfangsrichtung betrachtet wechselweise an Wandabschnitten 28, 38 der Gehäuseteile 24, 36 und an der anderen Umfangsseite in gleicher Weise in Umfangsrichtung betrachtet wechselweise an Wandabschnitten 29, 39 der Gehäuseteile 24, 36 an.

Die Dämpfungskissen 2 sind im Gehäuse 22 mit einer Vorspannung eingesetzt, indem sie unter Zusammenpressen in die Gehäuseteile 24, 36 eingesetzt wurden. Die Dämpfungskissen weisen eine der oben erläuterten Armierungen, z.B. 6 auf.

Die Gehäuseteile 24, 36 werden jeweils mit unterschiedlichen, durch ein gasdichtes, flexibles Rohrteil, wie einen Balg, verbundenen Rohrenden eines Entkopplungselements fest verbunden oder an diesem ausgebildet.

Wenn sich die Rohr- oder Anschlußenden relativ zueinander bewegen, so wird diese Bewegung auf die beiden Gehäuseteile 24, 36 übertragen. Bei einer Axialbewegung würde das Kissen 2 ohne Armierung 6 bei dieser beschriebenen paarigen Ausführungsform nicht durch Stauchung progressiv dämpfend wirksam, sondern vor allem durch Scherung (mit nachteiliger Längung) in den Lücken C, C'. Durch die Armierung 6 erfolgt nun - wechselweise für die Gehäuseteile 24, 36 - beidseitig derselben zwischen der Armierung 6 und der Gehäusewand 29 bzw. 38 eine Stauchung des Dämpfungskissens 2, über welche die Armierung 6 die einwirkende Axialkraft beispielsweise von 38 aufnimmt und auf 29 überträgt. Die primäre Scherkraft im Spalt C-C' wird also durch die Armierung 6 in eine Stauchung zwischen den Wänden 28, 29 und der Armierung 6 transformiert.

Die innere Armierung der Dämpfungskissen bewirkt also, daß Scherung vermieden wird und statt dessen die Bewegung durch einwirkende Kräfte bzw. Schwingungen gleichmäßig auf das Kissenvolumen und die axialen Widerlager (Gehäusewände) verteilt wird.

Durch diese Armierungen oder Verstärkungsteile wird erreicht, daß die Kissen höhere mechanische Lasten, insbesondere Scherkräfte aufnehmen können. Insbesondere die axiale Belastbarkeit gegenüber diesen wird erheblich gesteigert.

## Patentansprüche

1. Vorrichtung zum Dämpfen von Bewegungen, mit einem kompressiblen Dämpfungskissen (2) aus verpreßtem Metalldraht, dadurch gekennzeichnet, daß mindestens eine Ausnehmung (10, 11) wenigstens an zwei einander gegenüberliegenden Wänden (10a, 10b; 11a, 11b) durch verpreßten Metalldraht begrenzt ist und in jeder Ausnehmung (10, 11) ein die Außenkontur des Dämpfungskissens (1) nicht überragendes, inkompressibles Verstärkungsteil (3, 4, 5, 6, 7, 15) die Höhe der Ausnehmung (10, 11) zwischen den einander gegenüberliegenden Wänden (10a, 10b; 11a, 11b) vollständig einnimmt.

2. Vorrichtung nach Anspruch 1, dadurch gekennzeichnet, daß das Verstärkungsteil (3, 4, 5, 6, 7) vollständig vom Kissenmaterial (2) umgeben ist.

3. Vorrichtung nach Anspruch 1, dadurch gekennzeichnet, daß das Verstärkungsteil (15) in einer einseitig offenen vorgesehenen Nut (11) des Kissenmaterials (2) eingebracht ist.

4. Vorrichtung nach einem der vorangehenden Ansprüche, dadurch gekennzeichnet, daß bei ringförmiger Kontur des Kissens (1) das Verstärkungsteil (3, 4, 5, 6, 7, 15) ebenfalls ringförmig ausgebildet ist.

5. Vorrichtung nach einem der Ansprüche 1 bis 3, dadurch gekennzeichnet, daß Verstärkungsteile (3, 4, 5, 6, 7, 15) als Ringsegmente ausgebildet sind.

6. Vorrichtung nach einem der vorangehenden Ansprüche, dadurch gekennzeichnet, daß das Verstärkungsteil durch einzelne Drähte (3) gebildet ist.

7. Vorrichtung nach einem der vorangehenden Ansprüche, dadurch gekennzeichnet, daß das Verstärkungsteil als Drahtseil oder -bündel (5) ausgebildet ist.

8. Vorrichtung nach einem der Ansprüche 1 bis 5, dadurch gekennzeichnet, daß das Verstärkungsteil als Massivteil (4, 6) ausgebildet ist.

9. Vorrichtung nach einem der Ansprüche 1 bis 5, dadurch gekennzeichnet, daß das Verstärkungsteil als Blechlamellenpaket ausgebildet ist.

10. Vorrichtung nach einem der Ansprüche 1 bis 5, dadurch gekennzeichnet, daß das Verstärkungsteil die Form eines Hohlprofils (7) aufweist.

11. Vorrichtung nach einem der Ansprüche 1 bis 10, dadurch gekennzeichnet, daß das Verstärkungsteil (15) eine von der Kontur des Dämpfungskissens (2) abweichende Kontur aufweist.

12. Vorrichtung nach Anspruch 11, dadurch gekennzeichnet, daß bei kreisringförmiger Kissenstruktur das Verstärkungsteil (15) ellipsenförmig ausgebildet ist.

13. Vorrichtung nach einem der vorangehenden Ansprüche, dadurch gekennzeichnet, daß der Querschnitt des Verstärkungsteils (15) in Umfangsrichtung unterschiedlich ist.

14. Vorrichtung nach einem der vorangehenden Ansprüche, dadurch gekennzeichnet, daß das Dämpfungskissen (1) aus mehreren Einzelkissen ausgebildet ist.

15. Vorrichtung nach einem der vorangehenden Ansprüche, dadurch gekennzeichnet, daß an dem Dämpfungskissen (2) als Widerlager ausschließlich von außen angreifende, unmittelbar nebeneinander liegende Wandabschnitte (28, 29; 38, 39) eines das Dämpfungskissen einschließenden Gehäuses (24, 36) relativ zueinander beweglich sind.

16. Vorrichtung nach Anspruch 15, dadurch gekennzeichnet, daß beidseitig des Dämpfungskissens (2) angeordnete Wandabschnitte (28, 29; 38, 39) eines Gehäuseteils (24, 36) jeweils paarig einander fluchtend gegenüberliegen.

17. Vorrichtung nach Anspruch 16, dadurch gekennzeichnet, daß beidseitig des Dämpfungskissens (2) angeordnete, relativ zueinander bewegliche Wandabschnitte (28 mit 38; 29 mit 39) unterschiedlicher Gehäuseteile (24, 36) einander fluchtend gegenüberliegen.

## Claims

1. Device for damping movements, having a compressible damping cushion (2) formed from pressed metal wire, characterized in that at least one recess (10,11) at least on two facing walls (10a,10b; 11a,11b) is bounded by pressed metal wire and in each recess (10,11) an incompressible reinforcing part (3,4,5,6,7,15) not projecting over the outer contour of the damping cushion (1) completely takes up the height of the recess (10,11) between the facing walls (10a,10b; 11a,11b).

2. Device according to claim 1, characterized in that the reinforcing part (3,4,5,6,7) is completely surrounded by cushion material (2).

3. Device according to claim 1, characterized in that the reinforcing part (15) is inserted in a groove (11), which is open on one side, of the cushion material (2).

4. Device according to one of the preceding claims, characterized in that in the case of a circular contour of the cushion (1), the reinforcing part (3,4,5,6,7,15) is also circular.

5. Device according to one of the claims 1 to 3, characterized in that the reinforcing parts (3,4,5,6,7,15) are constructed as ring segments.

6. Device according to one of the preceding claims, characterized in that the reinforcing part is formed by individual wires (3).

7. Device according to one of the preceding claims, characterized in that the reinforcing part is constructed as a wire cable or bundle (5).

8. Device according to one of the claims 1 to 5, characterized in that the reinforcing part is constructed as a solid part (4,6).

9. Device according to one of the claims 1 to 5, characterized in that the reinforcing part is constructed as a sheet packet.

10. Device according to one of the claims 1 to 5, characterized in that the reinforcing part is in the form of a hollow profile (7).

11. Device according to one of the claims 1 to 10, characterized in that the reinforcing part (15) has a contour diverging from the contour of the damping cushion (2).

12. Device according to claim 11, characterized in that in the case of a circular ring-shaped cushion contour the reinforcing part (15) is elliptical.

13. Device according to one of the preceding claims, characterized in that the cross-section of the reinforcing part (15) is circumferentially different.

14. Device according to one of the preceding claims, characterized in that the damping cushion (1) is formed from several individual cushions.

15. Device according to one of the preceding claims, characterized in that on the damping cushion (2) as abutments wall portions (28,29; 38,39) of a casing (24,36) enclosing the damping cushion which exclusively engage from the outside and are immediately juxtaposed are movable relative to one another.

16. Device according to claim 15, characterized in that wall portions (28,29; 38,39) of a casing part (24,36) arranged on either side of the damping cushion (2) in each case face one another in pairwise aligned manner.

17. Device according to claim 16, characterized in that wall portions (28 with 38; 29 with 39) of different casing parts (24,36) movable relative to one another and arranged on either side of the damping cushion (2) face one another in aligned manner.

## Revendications

1. Dispositif pour amortir des mouvements, comprenant un coussin d'amortissement (2) compressible en fil métallique pressé, caractérisé en ce qu'au moins un évidement (10,11), ménagé dans au moins deux parois (10a,10b ; 11a,11b) en regard, est délimité par du fil métallique pressé, et en ce que dans chaque évidement (10,11), une pièce de renfort (3,4,5,6,7,15) incompressible, ne dépassant pas le contour extérieur du coussin d'amortissement, occupe la totalité de la hauteur de l'évidement (10,11) entre les parois (10a,10b ; 11a,11b) en regard.

2. Dispositif selon la revendication 1, caractérisé en ce que la pièce de renfort (3,4,5,6,7) est entièrement bordée par le matériau du coussin (2).

3. Dispositif selon la revendication 1, caractérisé en ce que la pièce de renfort (15) est introduite dans une rainure (11) à ouverture unilatérale ménagée dans le matériau formant le coussin (12).

4. Dispositif selon l'une quelconque des revendications précédentes, caractérisé en ce que, si le coussin (2) présente un contour annulaire, la pièce de renfort (3,4,5,6,7,15) est également conformée en contour annulaire.

5. Dispositif selon l'une quelconque des revendications 1 à 3, caractérisé en ce que des pièces de renfort (3,4,5,6,7,15) sont conformées en segments annulaires.

6. Dispositif selon l'une quelconque des revendications précédentes, caractérisé en ce que la pièce de renfort est constituée de fils métalliques (3) séparés.

7. Dispositif selon l'une quelconque des revendications précédentes, caractérisé en ce que la pièce de renfort est conformée en câble métallique ou en faisceau de fils métalliques (5).

8. Dispositif selon l'une quelconque des revendications 1 à 5, caractérisé en ce que la pièce de renfort est d'une seule pièce (4,6).

9. Dispositif selon l'une quelconque des revendications 1 à 5, caractérisé en ce que la pièce de renfort est conformée en faisceau de lamelles métalliques.

10. Dispositif selon l'une quelconque des revendications 1 à 5, caractérisé en ce que la pièce de renfort présente une forme en contour creux (7).

11. Dispositif selon l'une quelconque des revendications 1 à 10, caractérisé en ce que la pièce de renfort (15) présente un contour différent de celui du coussin d'amortissement (2).

12. Dispositif selon la revendication 11, caractérisé en ce que la structure du coussin correspond à un anneau de cercle et la pièce de renfort (15) est conformée en ellipse.

13. Dispositif selon l'une quelconque des revendications précédentes, caractérisé en ce que la section de la pièce de renfort (15) varie en direction de la périphérie.

14. Dispositif selon l'une quelconque des revendications précédentes, caractérisé en ce que le coussin d'amortissement est constitué de plusieurs coussins individuels.

15. Dispositif selon l'une quelconque des revendications précédentes, caractérisé en ce que seules des sections de paroi (28,29 ; 38,39) d'un boîtier (24,36) entourant le coussin d'amortissement, agissant de l'extérieur et situées directement l'une à côté de l'autre, sont mobiles l'une par rapport à l'autre pour servir de butée au coussin d'amortissement.

16. Dispositif selon la revendication 15, caractérisé en ce que des sections de paroi (28,29 ; 38,39) d'une partie du boîtier (24,36) disposées de part et d'autre du coussin d'amortissement (2) sont situées en regard, et alignées par paires.

17. Dispositif selon la revendication 16, caractérisé en ce que des sections de parois de différentes parties du boîtier (24,36), disposées de part et d'autre du coussin d'amortissement (2) et mobiles l'une par rapport à l'autre (28 par rapport à 38, 29 par rapport à 39) sont alignées en regard.
